Europäisches Patentamt

European Patent Office

Office européen des brevets

(19)

(11) Publication number: **0 154 216**
**B1**

# EUROPEAN PATENT SPECIFICATION

(12)

(45) Date of publication of patent specification: **28.12.88**

(51) Int. Cl.⁴: **F 16 D 3/84**

(21) Application number: **85101518.0**

(22) Date of filing: **13.02.85**

(54) **Method of manufacturing a means of protection for a cardanic propeller shaft and means of protection obtained by the method.**

(30) Priority: **01.03.84 IT 1987384**

(43) Date of publication of application:
**11.09.85 Bulletin 85/37**

(45) Publication of the grant of the patent:
**28.12.88 Bulletin 88/52**

(84) Designated Contracting States:
**DE FR GB**

(56) References cited:
**FR-A-1 289 338**
**FR-A-1 357 007**
**FR-A-2 142 103**
**FR-A-2 187 053**
**FR-A-2 334 877**
**FR-A-2 507 266**

(73) Proprietor: **BENZI & DI TERLIZZI s.n.c.**
**7, Via Rivolta**
**I-20062 Cassano d'Adda (IT)**

(72) Inventor: **Benzi, Rolando**
**Via Rivolta, 7**
**I-20062 Cassano d'Adda (IT)**

(74) Representative: **Ferraiolo, Ruggero**
**Via Napo Torriani, 10**
**I-20124 Milano (IT)**

Courier Press, Leamington Spa, England.

EP 0 154 216 B1

## Description

This present invention concerns a method of manufacturing a means of protection for a cardanic propeller shaft and the means of protection obtained by the method.

In agriculture particularly there are power-consuming machines (such as rotary hoes, rotary ditchers) that receive mechanical energy from an engine associated to a driving machine (such as a tractor) through mechanical connection comprising a propeller shaft coupled to the two machines by means of a Cardan joint.

Normal prudence and regulations to prevent accidents require that said propeller shaft with the Cardan joints placed at its two ends be protected by a means of protection such as will cover the first Cardan joint, the shaft and the second Cardan joint without any intermission.

Means of protection suitable for the above function have been known for some time. These means usually consist of two assemblies made of plastic material one the same as the other except for some dimensions. An assembly protects one Cardan joint and a portion of the shaft and the other assembly protects the other joint and the remainder of the shaft. Each assembly comprises the following component parts: a tube for protecting a portion of the shaft, a cone-shaped piece (hereinafter simply called a cone) for protecting that part of the cardan joint adjacent to the shaft, a band associated to the larger circumference of the cone for protecting the remainder of the Cardan joint a bearing ring connection means (hereinafter simply called a bearing ring) for mounting the means of protection on the corresponding joint, the bearing ring being made to fit and slide inside a groove in the fork of the joint. Hereinafter, for the sake of simplicity, when speaking of the protection we shall only refer to one assembly.

Known means of protection are generally distinguished one from another by the various ways in which each of the above components is connected to its corresponding component. Further, both the above ways of connecting components and the mechanical characteristics of each of said components make due allowance for requirements of safety rules. For example, connections between tube and cone and between bearing ring and fork must be able to withstand certain tractive forces according to the axis of the tube; the cone must be strong enough to withstand a certain direct force radially exerted from the outside towards the longitudinal axis of the cone without bending and breaking; the band associated to the cone must however be flexible enough to bend, without breaking, when it comes in contact with the joint due to inclination of the shaft.

Thus the applicant a long time ago realized a means of protection in which the connection between tube and cone was made by metal fastening clips forced through the thickness of the tube and of the cone collar; the bearing ring mounted in the groove in the fork of the joint had radial tabs that locked inside corresponding apertures in the tapered wall of the cone, a ring being then forced behind said tabs to prevent the cone coming off the bearing ring. The firm Jean Walterscheid GmbH of Lohmar/Rheinland, German Federal Republic, makes a means of protection in which the tube and cone are connected by a plurality of holes on the edge of the tube and a corresponding plurality of pins formed radially on the neck of the cone, their projection being about the same as the thickness of the tube walls; the edge of the tube is forced over the pins and is then pressed so that each pin penetrates into its corresponding hole; the bearing ring mounted in the groove in the fork of the joint has radial tabs that lock into corresponding radial slits in the cone and this forms a good connection. As in the applicant's means of protection, here too the cone and band are all in one piece and differ little as regards resistance: the cone does not appear to be very resistent and the band not very flexible. Bondioli & Pavesi of Suzzara, Italy, make a means of protection in which a bearing ring fulfils both of two functions: (a) connecting to the tube by extensions that rest on the edge of the tube, externally to said tube, and carry teeth projecting inwards that are pressed into corresponding apertures in the end of the tube; (b) connecting to the cone by elastic extensions inclined in relation to the axis of the cone and which fit into slots in the cone, said slots being also inclined in relation to the axis of the cone; the flexible band is pressed inside the cone. Means of protection are known in which a single piece is made comprising the cone and the band of flexible material and to make up for lack of rigidity in the cone another rigid cone is forced into it.

Document FR-A-2 142 103 discloses a protection device wherein a cone and a band are formed as a first single piece connected to a tube by friction welding; these features delimit claims 1 and 5 of the present application.

Document FR-A-2 187 053 discloses a protection device comprising a bearing ring as a second single piece which connects the cone and band element to the rotating shaft.

The main drawbacks to the known means of protection are summarised below. In the applicant's means the metal fastening clips may rust and weaken the connection between tube and cone; the awkwardness of having to force a ring behind the tabs on the bearing ring; the cone and band being all in one means that the mechanical characteristics of both are unsatisfactory. In the means made by Messrs. Jean Walterscheid the type of connection between tube and cone is costly and not easy to make because of the effort required to push the tube into the cone; here again as well as in the means disclosed by FR-A-2 142 103 and FR-A-2 187 053 the cones and band are all in one and this is the cause of the same drawbacks as exist in the applicant's means, as stated above. In the Bondioli & Pavesi means the type of connection for coupling the various parts together is not very practical because a certain number of pieces have to be assembled. The drawback to the measure of reinforcing the cone is obvious both from the cost standpoint and from that of a practical mounting operation.

The method of manufacturing a means of protection of a cardanic propeller shaft according to this present invention comprises the novelty of forming a bearing ring of injection-moulded plastic material for connecting the cone-and-band element to the rotating shaft; of forming the cone from a first suitable plastic material connected to the tube either by welding or by injection-moulding of the smaller edge of the cone onto one end of the tube; of forming the band by injection-moulding of a second suitable plastic material onto the larger edge of the cone.

The result of this method is a protection means comprising two pieces: a piece of plastic material comprising a tube portion, a cone portion and a band portion; a bearing ring engaged into the fork of a cardan joint and into the above piece.

The main advantage of the invention resides in that the tube and cone portions are rigid as their functions require and the band portion is flexible as its function requires.

One way of carrying out the invention is described in detail below with reference to drawings which illustrate one specific embodiment, in which:

Fig. 1 is a partial longitudinal view, partly cut away, of a protection mounted in position,

Fig. 2 is detail A of Fig. 1,

Fig. 3 is the plan view of a nylon bearing ring,

Fig. 4 is a cross section, drawn from X to X, of Fig. 3,

Fig. 5 is a side view of an alternative bearing ring.

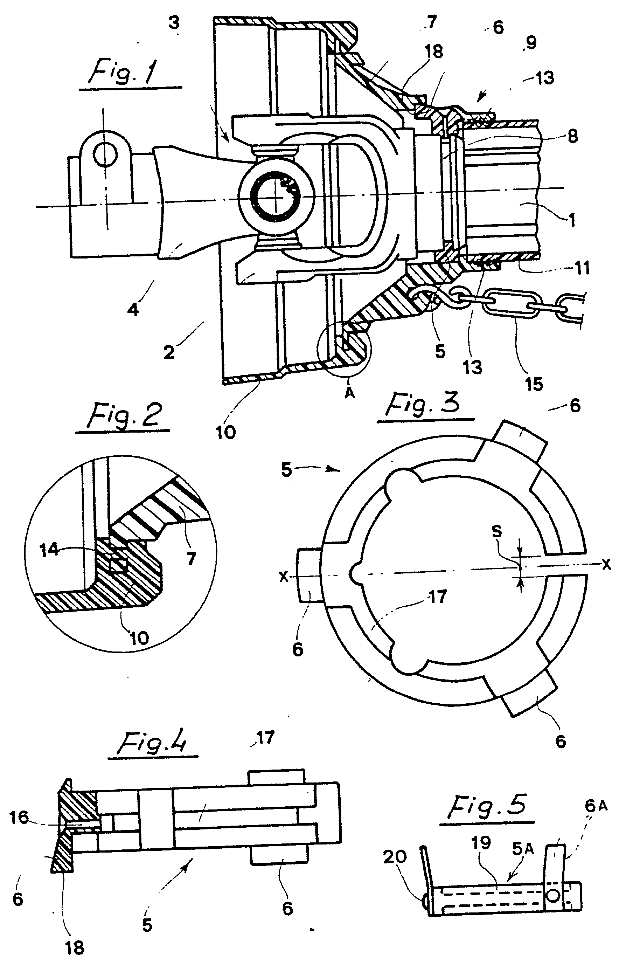

Fig. 1 shows: a part of a propeller shaft 1 connected to the fork 2 of a Cardan joint 3 and the remaining portion 4 of said joint; a nylon bearing ring 5 with three tabs 6 (only one of which can be seen) for locking to the cone 7 mounted in the groove 8 of the fork 2; the protection itself 9 is mounted round the shaft 1 and Cardan joint 3. As is known, the protection 9 remains mounted in position because each tab 6 of the bearing ring 5 locks into a corresponding aperture in cone 7.

Protection 9 is a single piece of plastic material consisting of the three component parts: band 10, cone 7 and tube 11 permanently fixed together; the outlines of each of the three pieces can be seen in the figure.

The cross-hatched part 13 indicates the area in which the material of tube 11 and the neck of cone 7 are joined together by ultrasonic welding. The means of joining band and cone can be best seen in Fig. 2 showing that part of the plastic material, injected for forming band 10 on the edge of cone 7, not only encloses said edge on three sides, but also penetrates into a hole 14, one of a plurality of holes made in said edge. A chain 15 holds the means of protection in position and prevents it from rotating along with the shaft (see Fig. 1).

Figs. 3 and 4 show a nylon bearing ring 5 with its three tabs 6; in the tab cut through in Fig. 4 there is a radial hole 16 for lubricating the area in which guide 17 of the bearing ring slides in the groove in the fork. This figure shows the shoulder 18 of the tab which lies against one side of the aperture in the cone, as also shown in Fig. 1. There is a gap in the annular part of this bearing ring where a portion of thickness S is missing and it is made in this way to allow the bearing ring to be mounted in the groove of the fork.

Fig. 5 shows a bearing ring 5A in which the annular part 19 is exactly the same as the annular part of the bearing ring seen in Figs. 3 and 4, and the tabs 6A consist of three steel blades fixed to the annular part by screws 20.

## Claims

1. Method of manufacturing a means of protection (9) for a cardanic propellor shaft comprising a first single piece consisting of a cone (7) and band (10) of injection-moulded plastic material connected to a tube (11) of injection-moulded plastic material and characterised in that a second single piece consisting of a bearing ring (5) of injection-moulded plastic material is formed and that the following steps are included to produce the first single piece:

- the cone (7) is formed from a first suitable plastic material and is connected to the tube (11) either by welding at their contacting surfaces or by injection-moulding of the smaller edge of the cone (7) onto one end of the tube (11);

- the band (10) is formed by the injection-moulding of a second suitable plastic material onto the larger edge of the cone (7).

2. Method according to Claim 1 characterised in that all around the circumference of the larger edge of the cone (7) are provided a plurality of projections and/or holes (14) to secure, upon injection-moulding of the band (10), the cone (7) to the band (10).

3. Method according to Claim 1 characterised in that, when the cone (7) is to be connected to the tube (11) by injection-moulding, all around the circumference of the tube (11) end are provided a plurality of projections or holes to secure, upon injection-moulding of the cone (7), the tube (11) to the cone (7).

4. Method according to the preceding claims characterised in that the bearing ring (5) comprises an annular part made of plastic and tabs (6A) made of steel which are screwed, rivetted or fixed to the annular part.

5. Means of protection (9) for a cardamic propellor shaft obtained by the method according to the preceding claims comprising a first single piece consisting of a tube (11), a cone (7) and a band (10) characterised in that the protection means (9) comprises only two pieces (7/10, 5):

- a first single piece consisting of a plastic tube (11) for protecting a portion of the propellor shaft (1) connected to a rigid cone (7) made of a first suitable plastic material for protecting that part of the Cardan joint (3) adjacent to the propellor shaft (1) and a flexible band (1) secured by injection-

EP 0 154 216 B1

moulding of a second suitable plastic material to the cone (7) for protecting the remainder of the Cardan joint (3);

- a second single piece consisting of a bearing ring (5) carrying internally a circular guide (17) made to fit and slide in a groove (2) of a Cardan joint (3) and carrying externally a plurality of elastic tabs (6) made to lock into corresponding apertures in the cone (7).

## Patentansprüche

1. Verfahren zum Herstellen einer Schutzvorrichtung (9) für eine kardanische Antriebswelle mit einem ersten Einzelteil, bestehend aus einem Kegel (7) und einem Band (10) aus Spritzguß-Kunststoffmaterial, das mit einem Rohr (11) aus Spritzguß-Kunststoffmaterial verbunden ist, dadurch gekennzeichnet, daß ein zweites Einzelteil, bestehend aus einem Stützring (5) aus Spritzguß-Kunststoffmaterial, ausgebildet ist, und daß die folgenden Schritte vorgesehen sind, um das erste Einzelteil herzustellen:
- der Kegel (7) wird aus einem ersten geeigneten Kunststoffmaterial gebildet und mit dem Rohr (11), entweder durch Schweißen an ihren Berührungsflächen oder durch Spritzgießen der schmaleren Kante des Kegels (7) auf ein Ende des Rohres (11), verbunden;
- das Band (10) wird durch den Spritzguß eines zweiten geeigneten Kunststoffmaterials auf der größeren Kante des Kegels (7) ausgebildet.

2. Verfahren nach Anspruch 1, dadurch gekennzeichnet, daß rings um den Umfang der größeren Kante des Kegels (7) eine Anzahl von Vorsprüngen und/oder Vertiefungen (14) vorgesehen sind, um unter Spritzgießen des Bandes (10) den Kegel (7) an dem Band (10) zu befestigen.

3. Verfahren nach Anspruch 1, dadurch gekennzeichnet, daß, wenn der Kegel (7) durch Spritzgießen mit dem Rohr (11) verbunden wird, rings um den Umfang des Rohrendes (11) eine Anzahl von Vorsprüngen oder Vertiefungen vorgesehen sind, um unter Spritzgießen des Kegels (7) das Rohr (11) an dem Kegel (7) zu befestigen.

4. Verfahren nach einem der vorstehenden Ansprüche, dadurch gekennzeichnet, daß · der Stützring (5) einen ringförmigen Teil aus Kunststoff und Streifen (6A) aus Metall, die an den ringförmigen Teil geschraubt, genietet oder festgeklemmt sind, aufweist.

5. Schutzmittel (9) für eine kardanische Antriebswelle, das durch das Verfahren gemäß der vorstehenden Ansprüche erhalten wird, mit einem ersten Einzelteil, das aus einem Rohr (11), einem Kegel (7) und einem Band (10) besteht, dadurch gekennzeichnet, daß das Schutzmittel (9) nur zwei Teile (7; 10, 5) umfaßt:
- ein erstes Einzelteil, bestehend aus einem Kunststoffrohr (11) zum Schutz eines Bereichs der Antriebswelle (1), das mit einem starren Kegel (7) aus einem geeigneten Kunststoffmaterial zum Schutz des an die Antriebswelle (1) angrenzenden Teils des Kardangelenkes (3) verbunden ist, und aus einem flexiblen Band (10), das durch Spritzgießen eines zweiten geeigneten Kunststoffmaterials an dem Kegel (7), zum Schutz des Restes des Kardangelenkes (3), befestigt ist;
- ein zweites Einzelteil, bestehend aus einem Stützring (5), der innen eine kreisförmige Führung (17) trägt, die in eine Rinne (2) eines Kardangelenkes (3) einpaßt und in dieser gleitet und außen eine Anzahl von elastischen Nasen (6) trägt, die in entsprechende Öffnungen des Kegels (7) eingreifen.

## Revendications

1. Procédé de fabrication d'un moyen de protection (9) pour un arbre de transmission à joints de cardan comprenant une première pièce d'un seul tenant composée d'un cône (7) et d'un collet (10) en matière plastique moulée par injection, assemblée à un tube (11) en matière plastique moulée par injection, et caractérisé par le fait que l'on forme une deuxième pièce d'un seul tenant composée d'une bague de portée (5) en matière plastique moulée par injection et en ce qu'il comporte les phases suivantes pour produire la première pièce d'un seul tenant
- on forme le cône (7) en une première matière plastique appropriée et on l'assemble au tube (11), soit par soudage à leurs surfaces de contact, soit par moulage par injection du petit bord du cône (7) sur une extrémité du tube (11);
- on forme le collet (10) par moulage par injection d'une deuxième matière plastique appropriée sur le grand bord du cône (7).

2. Procédé selon la revendication 1, caractérisé par le fait que, sur tout le tour de la circonférence du grand bord du cône (7), sont prévus une pluralité de saillies et/ou de trous (14) qui servent à fixer le cône (7) au collet (10) sous l'effet du moulage du collet (10) par injection.

3. Procédé selon la revendication 1, caractérisé par le fait que, dans le cas où le cône (7) doit être assemblé au tube (11) par moulage par injection, on prévoit, sur tout le tour de la circonférence de l'extrémité du tube (11), une pluralité de saillies ou de trous qui servent à fixer le tube (11) au cône (7) sous l'effet.

4. Procédé selon les revendications précédentes, caractérisé par le fait que la bague de portée (5) est constituée par une pièce annulaire faite de matière plastique et des pattes (6A) faites d'acier et qui sont vissées, rivetées ou fixées d'une autre façon à la partie annulaire.

5. Moyen de protection (9) pour un arbre de transmission à joint de cardan, obtenu par le procédé selon les revendications précédentes, comprenant une première pièce d'un seul tenant composée d'un tube (11), d'un cône (7) et d'un collet (10), caractérisé par le fait que le moyen de protection (9) ne comprend que deux pièces (7/10, 5):
- une première pièce d'un seul tenant composée d'un tube de matière plastique (11) destinée à protéger une portion de l'arbre de transmission (1) et assemblée à un cône rigide (7) faite d'une première matière plastique appropriée et destinée à protéger la partie du joint de cardan (3) qui est adjacente à l'arbre de transmission (1), et un collet souple (1) fixé au cône (7) par moulage par injection d'une deuxième matière plastique appropriée, pour protéger le reste du joint de cardan (3);

- une deuxième pièce d'un seul tenant composée d'une bague de portée (5) qui présente intérieurement un guide circulaire (17) formé de manière à s'encastrer et à glisser dans une gorge (2) d'un joint de cardan (3) et qui porte extérieurement une pluralité de pattes élastiques (6) formées de manière à se verrouiller dans des ouvertures correspondantes du cône (7).

_Fig.1_

_Fig.2_

_Fig.3_

_Fig.4_

_Fig.5_